# EUROPEAN PATENT APPLICATION

(11) **EP 4 851 782 A1**
(43) Date of publication of application: **09.12.2026**
(21) Application number: 24926692.5
(22) Date of filing: 05.09.2024
(51) Int. Cl.: G06F 8/41

(54) **PARAMETERIZATION INSTRUCTION SELECTION METHOD AND RELATED APPARATUS**

(30) Priority: 29.02.2024 CN 202410234625
(71) Applicant: HUAWEI TECHNOLOGIES CO., LTD., Shenzhen, Guangdong 518129 (CN)
(72) Inventor: LIU, Xiaolei, Shenzhen, Guangdong 518129 (CN); SUN, Qiang, Shenzhen, Guangdong 518129 (CN); TAO, Wei, Shenzhen, Guangdong 518129 (CN); PAN, Pingping, Shenzhen, Guangdong 518129 (CN)
(74) Representative: Maiwald GmbH
(86) International application number: PCT/CN2024/117014
(87) International publication number: WO 2025/179825

(57) **Abstract**

A parameterized instruction selection method is applied to optimize a compilation process performed by a compiler. In the parameterized instruction selection method, a corresponding machine instruction set is generated in advance for an instruction in to-be-compiled code during compilation, to indicate, based on the machine instruction set, one or more corresponding machine instructions that can be selected during compilation of each instruction in the code, so that the compiler no longer selects a default machine instruction for the instruction in the code, and the compiler is guided to select different machine instruction combinations in a compilation process, to obtain multiple different target files, and finally select a target file with optimal execution performance by executing multiple target files. This can improve flexibility of an instruction selection process, and further obtain a target file with better execution performance through compilation.

## Description

This application claims priority to Chinese Patent Application No. 202410234625.8, filed with the China National Intellectual Property Administration on February 29, 2024 and entitled "PARAMETERIZED INSTRUCTION SELECTION METHOD AND RELATED APPARATUS", which is incorporated herein by reference in its entirety.

### TECHNICAL FIELD

This application relates to the field of computer technologies, and in particular, to a parameterized instruction selection method and a related apparatus.

### BACKGROUND

Compilation is a process of translating source code written in a high-level language into a target file composed of a machine language. Simply put, compilation is to convert a high-level language into a binary language that can be recognized by a computer.

Generally, a compilation process is executed by a compiler. The compiler first compiles the source code into intermediate code, and then converts an instruction in the intermediate code into a machine instruction, to obtain the target file. In most cases, the instruction indicated in the intermediate code may be usually implemented via different machine instructions. Therefore, when the instruction in the intermediate code is converted into the machine instruction, an instruction selection process is usually involved.

However, a current compiler usually has a fixed instruction selection manner, that is, for an instruction of a specific type in the intermediate code, a default machine instruction is usually selected for an instruction of the type. As a result, an instruction selection process is fixed, and execution performance of a target file finally obtained through compilation is poor.

### SUMMARY

This application provides a parameterized instruction selection method, to guide a compiler to select a better machine instruction in a compilation process, to obtain a target file with better execution performance through compilation.

A first aspect of this application provides a parameterized instruction selection method, and the method is applied to a process in which a compiler compiles code. In the method, first code is first obtained. The first code is code that needs to be compiled by the compiler, for example, intermediate code obtained after the compiler performs initial compilation on source code. In addition, the first code includes the multiple instructions, and the compiler needs to perform further compilation on the first code to obtain a target file.

Then, an instruction table is generated based on the multiple instructions in the first code, and the instruction table includes multiple machine instruction sets corresponding to the multiple instructions. During compilation, the multiple instructions select, from the corresponding machine instruction sets, machine instructions used for compilation. To be specific, each machine instruction set in the multiple machine instruction sets has a corresponding instruction in the multiple instructions, that is, the multiple machine instruction sets are in a one-to-one correspondence with the multiple instructions in the first code. Each machine instruction set indicates one or more machine instructions that can be selected during compilation of an instruction that is in the first code and that corresponds to the machine instruction set. In other words, for the multiple instructions in the first code, a machine instruction set may be generated for each instruction in a part or all of instructions in the first code, and the machine instruction set indicates a machine instruction that can be selected during compilation of the instruction. The machine instruction set may include one or more machine instructions. If the machine instruction set includes only one machine instruction, it indicates that only one corresponding machine instruction can be selected during compilation of an instruction corresponding to the machine instruction set. If the machine instruction set includes multiple machine instructions, it indicates that any one of the multiple machine instructions can be selected during compilation of an instruction corresponding to the machine instruction set during compilation.

In addition, multiple rounds of machine instruction selection are performed based on the instruction table for multiple instructions, to obtain multiple target files, where the multiple target files are obtained by selecting different machine instruction combinations for the multiple instructions from the multiple machine instruction sets. In other words, corresponding machine instructions may be selected based on the instruction table for multiple instructions in the first code, to obtain multiple target files. The multiple target files are obtained by selecting different machine instruction combinations for the multiple instructions from the multiple machine instruction sets. In each round of machine instruction selection, one machine instruction is selected from a corresponding machine instruction set for each instruction in the multiple instructions, so that a target file including multiple machine instructions can be obtained after each round of machine instruction selection is completed. The instruction in the first code has a corresponding machine instruction set, and the machine instruction set may include multiple selectable machine instructions. Therefore, when each target file is generated, any one of the machine instructions may be selected from the machine instruction set corresponding to the instruction in the first code. In this way, for instructions that are in the first code and that correspond to machine instruction sets including multiple machine instructions, different machine instruction combinations are selected from the machine instruction sets for these instructions, to obtain multiple different target files. That is, one target file is equivalent to one machine instruction combination.

For example, it is assumed that the first code includes an instruction A and an instruction B, a machine instruction set corresponding to the instruction A includes a machine instruction 1 and a machine instruction 2, and a machine instruction set corresponding to the instruction B includes a machine instruction 3 and a machine instruction 4. In this way, when a target file 1 is generated, the corresponding machine instruction 1 may be selected for the instruction A, and the corresponding machine instruction 3 may be selected for the instruction B, that is, a machine instruction combination of the target file 1 is the machine instruction 1 + the machine instruction 3; when a target file 2 is generated, the corresponding machine instruction 2 may be selected for the instruction A, and the corresponding machine instruction 3 may be selected for the instruction B, that is, a machine instruction combination of the target file 2 is the machine instruction 2 + the machine instruction 3; when a target file 3 is generated, the corresponding machine instruction 1 may be selected for the instruction A, and the corresponding machine instruction 4 may be selected for the instruction B, that is, a machine instruction combination of the target file 3 is the machine instruction 1 + the machine instruction 4; and when a target file 4 is generated, the corresponding machine instruction 2 may be selected for the instruction A, and the corresponding machine instruction 4 may be selected for the instruction B, that is, a machine instruction combination of the target file 1 is the machine instruction 2 + the machine instruction 4.

Finally, a target file with best execution performance is selected from the multiple target files. For example, the multiple target files are separately executed, and one or more target files with best execution performance are selected based on execution performance of the multiple target files. The execution performance of the target file may refer to, for example, performance information such as a startup speed or a response speed of the target file.

In this solution, in a compilation process, a corresponding machine instruction set is generated in advance for an instruction in to-be-compiled code, to indicate, based on the machine instruction set, one or more corresponding machine instructions that can be selected during compilation of each instruction in the code, so that the compiler no longer selects a default machine instruction for the instruction in the code, and the compiler is guided to select different machine instruction combinations in the compilation process, to obtain multiple different target files, and finally select a target file with optimal execution performance by executing multiple target files. This can improve flexibility of an instruction selection process, and further obtain a target file with better execution performance through compilation.

A conventional compilation process is a closed process, and a compiler compiles code according to a specified compilation process. As a result, a same piece of code is usually compiled to obtain only one specific target file. In addition, in the conventional compilation process, for instructions, in the code, for which different machine instructions can be selected as compilation results, the compiler usually selects only a default machine instruction. As a result, a machine instruction selection manner is not flexible, and it is difficult to select an optimal machine instruction. This is because, in many cases, the default machine instruction selected by the compiler is not the optimal machine instruction. In this case, in this solution, multiple corresponding machine instruction sets are generated for code, which is equivalent to providing an external interface for a compilation process, so that a compiler can randomly select a corresponding machine instruction for an instruction corresponding to the multiple machine instructions, to obtain different machine instruction combinations. Finally, performance of the multiple different machine instruction combinations is determined by executing a target file, and one or more machine instruction combinations (that is, the target file) with optimal execution performance are determined.

In a possible implementation, in the method, multiple instruction configuration files may be generated based on multiple instructions, where each instruction configuration file includes at least one piece of configuration information corresponding to a single instruction, and the configuration information indicates a condition that needs to be met when a machine instruction is selected for the corresponding instruction. Then, multiple rounds of machine instruction selection are performed for the multiple instructions based on the multiple instruction configuration files, to obtain the multiple target files, where the multiple target files are in a one-to-one correspondence with the multiple instruction configuration files.

In other words, the multiple instruction configuration files are first generated based on the multiple instructions in the first code. Each instruction configuration file in the multiple instruction configuration files is independently generated based on the first code, and each of the multiple instruction configuration files includes at least one piece of configuration information, that is, each instruction configuration file generates configuration information for at least one instruction in the first code. In the multiple instruction configuration files, different instruction configuration files configure different configuration information for the multiple instructions. Specifically, each instruction configuration file includes at least one piece of configuration information, and each piece of configuration information in the at least one piece of configuration information has a corresponding instruction in the multiple instructions (that is, each instruction for which configuration information needs to be generated has one unique corresponding piece of configuration information), and each piece of configuration information indicates a condition that needs to be met when a corresponding machine instruction is selected for an instruction in the first code. In other words, the configuration information serves as reference information for machine instruction selection corresponding to the instruction in the first code, thereby ensuring that reference to the configuration information is needed for completion of the selection process when the machine instruction is selected for the instruction in the first code.

In this way, corresponding machine instructions may be selected for the multiple instructions in the first code based on the multiple instruction configuration files, to obtain multiple target files corresponding to the multiple instruction configuration files. In other words, the multiple instruction configuration files are in a one-to-one correspondence with the multiple target files, and the multiple target files are obtained based on the different instruction configuration files, respectively.

Finally, the multiple target files are separately executed, and one or more target files with best execution performance are selected based on execution performance of the multiple target files. The execution performance of the target file may refer to, for example, performance information such as a startup speed or a response speed of the target file.

In this solution, different configuration information combinations (that is, instruction configuration files) are generated for instructions in a same piece of code, so that different conditions can be specified when corresponding machine instructions are selected for the instructions in the code, and different target files can be further obtained through compilation based on the same piece of code. In this way, a target file with optimal execution performance can be effectively determined by comparing execution performance of different target files. This helps obtain an optimal target file through compilation when it is difficult to determine optimal configuration information of each instruction in code. In addition, multiple independent instruction configuration files are generated, so that isolation between configuration information combinations can be implemented, and separate backup of each configuration information combination can be implemented. In this way, when multiple target files are generated, the multiple target files can be generated in parallel based on the multiple instruction configuration files, thereby improving generation efficiency of the target files. In addition, after the target file with optimal performance is finally selected, a corresponding instruction configuration file can be traced back, thereby facilitating subsequent further analysis of the configuration information (for example, research on what kind of configuration information is used to easily select an optimal machine instruction).

In a possible implementation, the at least one piece of configuration information includes one or more of the following conditions: a type of a functional unit used by a machine instruction, whether a machine instruction updates a status register, a maximum quantity of bits of the machine instruction, an addressing mode of the machine instruction, or whether the machine instruction includes an immediate value.

In other words, when a machine instruction is selected for an instruction that is in the first code and that has corresponding configuration information, it needs to be ensured that the selected machine instruction meets one or more of the foregoing conditions indicated by the configuration information.

In a possible implementation, in a process of generating the multiple instruction configuration files based on the multiple instructions in the first code, specifically, configuration information of each instruction configuration file in the multiple instruction configuration files may be sequentially generated based on an execution sequence of the multiple instructions in the first code and contexts of the instructions. The contexts of the instructions may include an execution status of the instructions and/or configuration information generated for the instructions. In addition, a generation sequence of the configuration information in the instruction configuration file is related to an execution sequence of the instructions corresponding to the configuration information.

In other words, if an execution sequence position of an instruction corresponding to configuration information in the first code is earlier, a generation sequence position of the configuration information in an instruction configuration file is also earlier. In addition, when configuration information corresponding to an instruction is generated, in addition to analyzing the instruction itself, a context of the instruction may be further analyzed, so that optimal configuration information can be generated.

In this solution, configuration information corresponding to instructions is sequentially generated based on an execution sequence of the instructions in code and contexts of the instructions, so that impact of the instruction context on machine instruction selection can be considered in a process of generating the configuration information, to generate configuration information that can be used to select an optimal machine instruction, thereby ensuring quality of a target file finally generated based on the configuration information.

In a possible implementation, in a process of sequentially generating the configuration information in the instruction configuration files, an instruction configuration template may be first generated based on the execution sequence of the multiple instructions in the first code. The instruction configuration template indicates a target instruction, in the multiple instructions, for which configuration information needs to be generated, and a location of the target instruction in the multiple instructions. The target instruction may include one or more instructions, and a quantity of instructions included in the target instruction is the same as a quantity of configuration information in the instruction configuration file. That is, the instruction configuration template is used to specify an instruction, in the first code, for which configuration information needs to be generated and a relative location of the instruction in the first code.

Then, corresponding configuration information is sequentially filled in the instruction configuration template for the target instruction based on a context of the target instruction, to obtain a first instruction configuration file, where the context of the target instruction is obtained based on a location of the target instruction in the multiple instructions. The multiple instruction configuration files include the first instruction configuration file.

In this solution, an instruction configuration template is generated in advance based on an execution sequence of instructions in code, so that an instruction, in the code, for which configuration information needs to be generated and a location of the instruction in the code may be indicated based on the instruction configuration template. In this way, when the configuration information is subsequently generated for the instructions in the code, the configuration information is directly filled in the instruction configuration template based on an indication of the instruction configuration template, to complete construction of the instruction configuration file. In addition, one instruction configuration template may be repeatedly used to generate multiple different instruction configuration files, thereby improving generation efficiency of the instruction configuration files.

In a possible implementation, when the configuration information in the first instruction configuration file indicates a type of a functional unit used by a machine instruction, the target instruction for which the configuration information needs to be generated supports being compiled into a machine instruction that uses multiple functional units. To be specific, only when the instruction in the first code supports being compiled into a machine instruction that uses multiple functional units, the instruction needs to specify, in an instruction selection phase, the type of the functional unit used by the machine instruction. If the instruction in the first code does not support being compiled into a machine instruction that uses multiple functional units, the instruction does not need to specify the type of the functional unit used by the machine instruction in the instruction selection phase.

In this solution, the target instruction, in the code, for which the configuration information needs to be generated is determined from the perspective of the type of the configuration information that needs to be generated for the instruction, to ensure that the configuration information generated for the target instruction can indeed affect a process of selecting a machine instruction for the target instruction, and ensure that all configuration information generated for the target instruction is valid, thereby avoiding generation of invalid configuration information.

In a possible implementation, the multiple instructions include a first instruction and a second instruction, and both the first instruction and the second instruction support being compiled into machine instructions that use a first functional unit or a second functional unit.

In a process of generating the corresponding configuration information for the instruction in the first code, corresponding first configuration information may be first generated for the first instruction based on the first instruction and a context of the first instruction, where the first configuration information indicates that a machine instruction selected for the first instruction uses the first functional unit, and the context of the first instruction indicates that the first functional unit and the second functional unit are not occupied. That is, it may be determined, based on the context of the first instruction, that neither the first functional unit nor the second functional unit is occupied by an instruction. Therefore, the machine instruction that uses the first functional unit or the second function may be selected for the first instruction. For example, in this embodiment, the machine instruction that uses the first functional unit is selected for the first instruction by default.

Then, corresponding second configuration information is generated for the second instruction based on the second instruction and a context of the second instruction, where the second configuration information indicates that a machine instruction selected for the second instruction uses the second functional unit, and the context of the second instruction indicates that the first instruction executed before the second instruction has occupied the first functional unit.

In other words, when it is determined, based on the context of the second instruction, that another instruction executed before the second instruction has occupied the first functional unit, a machine instruction that uses the unoccupied second functional unit may be selected for the second instruction. This avoids selecting a machine instruction that uses a same functional unit for both the first instruction and the second instruction, thereby avoiding a case in which an instruction waits to be executed subsequently.

In this solution, for instructions that can be compiled into machine instructions that use different functional units in code, configuration information is generated for the instructions based on contexts of the instructions, so that machine instructions that use different functional units can be selected for different instructions as much as possible, and a case in which an instruction waits to be executed when different machine instructions are executed by a same functional unit can be avoided, thereby improving an execution speed of a target file obtained through compilation.

A second aspect of this application provides a parameterized instruction selection apparatus, including: an obtaining module, configured to obtain first code, where the first code includes multiple instructions; and a processing module, configured to generate, based on the multiple instructions, multiple machine instruction sets corresponding to the multiple instructions, where the multiple instructions are used to select, from the corresponding machine instruction sets, machine instructions used for compilation. The processing module is further configured to perform multiple rounds of machine instruction selection for the multiple instructions, to obtain multiple target files, where the multiple target files are obtained by selecting different machine instruction combinations for the multiple instructions from the multiple machine instruction sets; and the processing module is further configured to select a target file with best execution performance from the multiple target files.

In a possible implementation, the processing module is further configured to: generate multiple instruction configuration files based on the multiple instructions, where each instruction configuration file includes at least one piece of configuration information corresponding to a single instruction, and the configuration information indicates a condition that needs to be met when a machine instruction is selected for the corresponding instruction; and perform multiple rounds of machine instruction selection for the multiple instructions based on the multiple instruction configuration files, to obtain the multiple target files, where the multiple target files are in a one-to-one correspondence with the multiple instruction configuration files.

In a possible implementation, the at least one piece of configuration information includes one or more of the following conditions: a type of a functional unit used by a machine instruction, whether a machine instruction updates a status register, a maximum quantity of bits of the machine instruction, an addressing mode of the machine instruction, or whether the machine instruction includes an immediate value.

In a possible implementation, the processing module is further configured to generate configuration information in the multiple instruction configuration files based on an execution sequence of the multiple instructions in the first code and contexts of the instructions.

In a possible implementation, the processing module is further configured to: generate an instruction configuration template based on the execution sequence of the multiple instructions in the first code, where the instruction configuration template indicates a target instruction, in the multiple instructions, for which configuration information needs to be generated, and a location of the target instruction in the multiple instructions; and sequentially fill the corresponding configuration information in the instruction configuration template for the target instruction based on a context of the target instruction, to obtain a first instruction configuration file, where the context of the target instruction is obtained based on the location of the target instruction in the multiple instructions, and the multiple instruction configuration files include the first instruction configuration file.

In a possible implementation, when the configuration information in the instruction configuration file indicates a type of a functional unit used by a machine instruction, the target instruction for which the configuration information needs to be generated supports being compiled into a machine instruction that uses multiple functional units.

In a possible implementation, the multiple instructions include a first instruction and a second instruction, and both the first instruction and the second instruction support being compiled into machine instructions that use a first functional unit or a second functional unit; and the processing module is further configured to: generate corresponding first configuration information for the first instruction based on the first instruction and a context of the first instruction, where the first configuration information indicates that a machine instruction selected for the first instruction uses the first functional unit, and the context of the first instruction indicates that the first functional unit and the second functional unit are not occupied; and generate corresponding second configuration information for the second instruction based on the second instruction and a context of the second instruction, where the second configuration information indicates that a machine instruction selected for the second instruction uses the second functional unit, and the context of the second instruction indicates that the first instruction executed before the second instruction has occupied the first functional unit.

In a possible implementation, the first code is intermediate code.

A third aspect of this application provides a parameterized instruction selection apparatus. The apparatus may include a processor, the processor is coupled to a memory, the memory stores program instructions, and when the program instructions stored in the memory are executed by the processor, the method according to the first aspect or any one of the implementations of the first aspect is implemented. For details of steps that are performed by the processor and that are in the possible implementations of the first aspect, refer to the first aspect. Details are not described herein again.

A fourth aspect of this application provides a computer-readable storage medium. The computer-readable storage medium stores a computer program. When the computer program is run on a computer, the computer is enabled to perform the method according to any one of the implementations of the first aspect.

A fifth aspect of this application provides a circuit system. The circuit system includes a processing circuit. The processing circuit is configured to perform the method according to any one of the implementations of the first aspect.

A sixth aspect of this application provides a computer program product. When the computer program product runs on a computer, the computer is enabled to perform the method according to any one of the implementations of the first aspect.

A seventh aspect of this application provides a chip system. The chip system includes a processor, configured to support a server or a feature selection apparatus in implementing a function in any one of the implementations of the first aspect, for example, processing data and/or information in the foregoing method. In a possible design, the chip system further includes a memory, and the memory is configured to store program instructions and data that are necessary for the server or the feature selection apparatus. The chip system may include a chip, or may include a chip and another discrete component.

For beneficial effects of the second aspect to the seventh aspect, refer to the descriptions of the first aspect. Details are not described herein again.

### BRIEF DESCRIPTION OF DRAWINGS

FIG. 1 is a diagram of a structure of an electronic device 101 according to an embodiment of this application;
FIG. 2 is a schematic flowchart of a parameterized instruction selection method according to an embodiment of this application;
FIG. 3 is a schematic flowchart of application of a parameterized instruction selection method according to an embodiment of this application;
FIG. 4 is a schematic flowchart of performing a parameterized instruction selection method in an actual application process according to an embodiment of this application;
FIG. 5 is a diagram of establishing a mapping relationship between an instruction and an index for a function in intermediate code according to an embodiment of this application;
FIG. 6 is a diagram of performing an instantiation process on an instruction configuration template to generate different instruction configuration files according to an embodiment of this application;
FIG. 7 is a diagram of generating a target file based on an instruction configuration file according to an embodiment of this application;
FIG. 8 is a diagram of generating an instruction configuration table according to an embodiment of this application;
FIG. 9 is a diagram of a process of instantiating an instruction configuration template according to an embodiment of this application;
FIG. 10 is a diagram of a process of implementing parameterized instruction selection according to an embodiment of this application;
FIG. 11 is a diagram of a structure of a parameterized instruction selection apparatus according to an embodiment of this application;
FIG. 12 is a diagram of a structure of an execution device according to an embodiment of this application; and
FIG. 13 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions used in such a manner are interchangeable in proper cases, so that embodiments can be implemented in other orders than the order illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

Unit division in this application is logical division and may be other division during actual implementation. For example, multiple units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into multiple circuit units. A part or all of the units may be selected according to actual requirements to achieve the objectives of the solutions of this application.

For ease of understanding, the following first describes some technical terms used in embodiments of this application.

### (1) Source code

Source code (also called source program) refers to a text file that is not compiled and written according to a specific programming language specification, and is a series of human-readable computer language instructions. In modern programming languages, source code can appear in a form of books or tapes, but a most commonly used format is a text file. A purpose of this typical format is to compile a computer program. An ultimate purpose of computer source code is to translate human-readable text into binary instructions that can be executed by a computer. This process is called compilation, and is completed by a compiler.

### (2) Compilation

Compilation is a process of converting source code into an executable file by using a compilation program. Simply put, compilation is to convert the source code written in a high-level language into a binary language that can be recognized by the computer. Since the computer only recognizes 1 and 0, the compilation program essentially translates a language familiar to humans into a binary language.

Generally, a working process of translating source code into an executable file by a compilation program is divided into five phases: lexical analysis, syntax analysis, semantic analysis and intermediate code generation, code optimization, and target code generation.

### (3) Intermediate code

Intermediate code is syntax-oriented, equivalent internal representation code of a source program that is easy to translate into a target program. Comprehensibility and ease of generating target code of the intermediate code are between a source language and a target language. Commonly used intermediate languages include reverse Polish notation, quadruples, triples, and tree representations.

### (4) Target file

A file generated after the compiler compiles the source code is called a target file. Generally, the target file includes machine instructions that can be directly recognized by the computer.

### (5) Machine instruction

A machine instruction is an instruction that can be directly recognized and executed by a central processing unit (Central Processing Unit, CPU), and is represented in a form of binary code. A machine instruction usually includes two parts: operation code and operand. The operation code indicates an operation to be completed by the instruction, that is, a function of the instruction. The operand indicates an object participating in an operation, a location where an operation result is stored, and the like.

### (6) Instruction selection

Instruction selection is an important step in a compilation process, and is mainly used to convert intermediate code into a machine instruction, that is, to select a corresponding machine instruction for an instruction in the intermediate code.

In a compilation process of source code, the compiler first compiles the source code into intermediate code, and then converts an instruction in the intermediate code into a machine instruction, to obtain a target file. The instruction indicated in the intermediate code may be usually implemented via different machine instructions. Therefore, when the instruction in the intermediate code is converted into the machine instruction, an instruction selection process is usually involved. In addition, in a process of converting the intermediate code, quality of the machine instruction selected for the instruction in the intermediate code usually affects quality of the finally generated target file.

However, a current compiler usually has a fixed instruction selection manner, that is, for an instruction of a specific type in the intermediate code, a default machine instruction is usually selected for an instruction of the type. As a result, an instruction selection process is fixed, and execution performance of a target file finally obtained through compilation is poor (that is, a target file with poor quality is obtained), for example, a startup speed or a response speed of the target file is slow during running of the target file.

Based on this, embodiments provide a parameterized instruction selection method. In a compilation process, an instruction configuration file is generated in advance for to-be-compiled code, to indicate, based on configuration information in the instruction configuration file, a condition that needs to be met when a corresponding machine instruction is selected for an instruction in the code, thereby limiting a range of machine instructions that can be selected for the instruction in the code in the code compilation process. In this way, a compiler no longer selects a default machine instruction for the instruction in the code, and the compiler is guided to select a better machine instruction in the compilation process, so that flexibility of an instruction selection process is improved, and a target file with better execution performance is further obtained through compilation.

The parameterized instruction selection method provided in embodiments of this application may be applied to an electronic device on which a compiler is deployed. For example, the electronic device may be, for example, a server, a smartphone (mobile phone), a personal computer (personal computer, PC), a notebook computer, or a tablet computer.

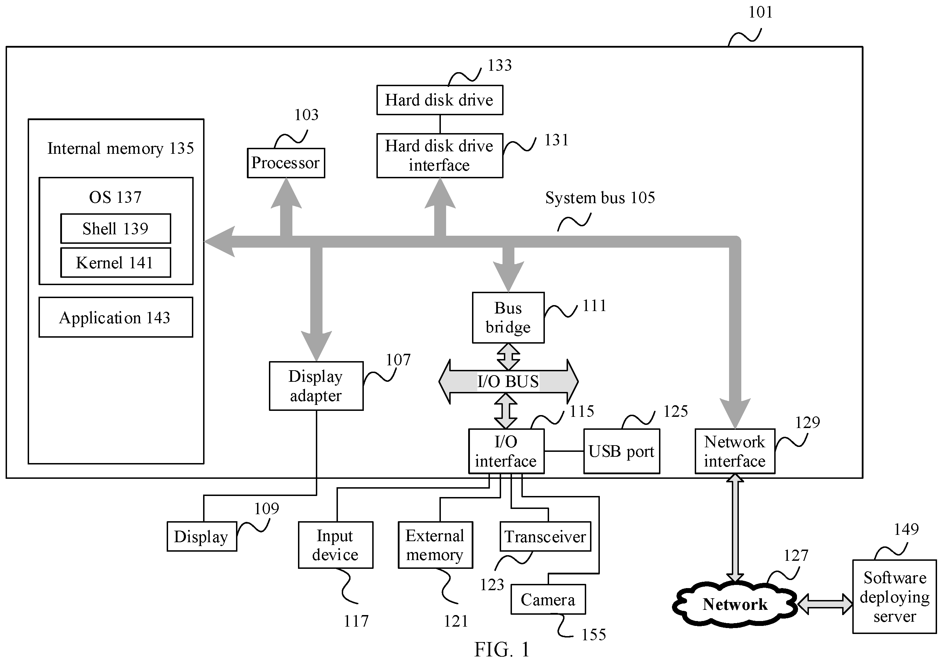

FIG. 1 is a diagram of a structure of an electronic device 101 according to an embodiment of this application. As shown in FIG. 1, the electronic device 101 includes a processor 103, where the processor 103 is coupled to a system bus 105. The processor 103 may be one or more processors, and each processor may include one or more processor cores. A display adapter (video adapter) 107 is further included, and the display adapter may drive a display 109, and the display 109 is coupled to the system bus 105. The system bus 105 is coupled to an input/output (Input/Output, I/O) bus through a bus bridge 111. An I/O interface 115 is coupled to the I/O bus. The I/O interface 115 communicates with multiple I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus such as an ASIC.

The electronic device 101 may communicate with a software deploying server 149 through a network interface 129. For example, the network interface 129 is a hardware network interface, for example, a network interface card. A network 127 may be an external network such as the internet, or an internal network such as the Ethernet or a virtual private network (virtual private network, VPN). Optionally, the network 127 may alternatively be a wireless network, for example, a Wi-Fi network, a cellular network, or the like.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application 143, and a schedule table of the electronic device 101.

The operating system includes a shell 139 and the kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts that are in the operating system and that are used to manage a memory, a file, a peripheral, and a system resource. The kernel 141 directly interacts with hardware, the kernel of the operating system usually runs a process, provides inter-process communication, and provides functions such as CPU time slice management, interrupt, memory management, and I/O management.

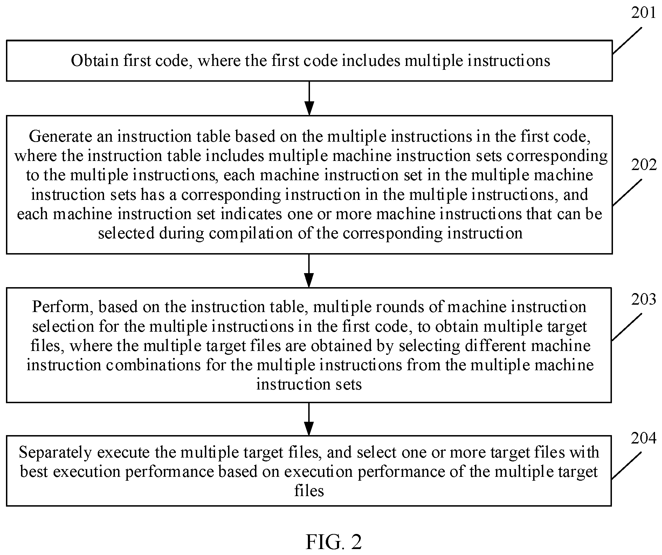

The following describes in detail a parameterized instruction selection method provided in embodiments of this application. FIG. 2 is a schematic flowchart of a parameterized instruction selection method according to an embodiment of this application. As shown in FIG. 2, the parameterized instruction selection method includes the following steps 201 to 204.

Step 201: Obtain first code, where the first code includes multiple instructions.

In this embodiment, the first code is, for example, intermediate code obtained after a compiler performs initial compilation on source code. In addition, the first code includes the multiple instructions, and the compiler needs to perform further compilation on the first code to obtain a target file.

Step 202: Generate an instruction table based on the multiple instructions in the first code, where the instruction table includes multiple machine instruction sets corresponding to the multiple instructions, each machine instruction set in the multiple machine instruction sets has a corresponding instruction in the multiple instructions, and each machine instruction set indicates one or more machine instructions that can be selected during compilation of the corresponding instruction.

To be specific, the multiple machine instruction sets are in a one-to-one correspondence with the multiple instructions in the first code. Each machine instruction set indicates one or more machine instructions that can be selected during compilation of an instruction that is in the first code and that corresponds to the machine instruction set. In other words, for the multiple instructions in the first code, a machine instruction set may be generated for each instruction in a part or all of instructions in the first code, and the machine instruction set indicates a machine instruction that can be selected during compilation of the instruction. The machine instruction set may include one or more machine instructions. If the machine instruction set includes only one machine instruction, it indicates that only one corresponding machine instruction can be selected during compilation of an instruction corresponding to the machine instruction set. If the machine instruction set includes multiple machine instructions, it indicates that any one of the multiple machine instructions can be selected during compilation of an instruction corresponding to the machine instruction set during compilation.

Step 203: Perform, based on the instruction table, multiple rounds of machine instruction selection for the multiple instructions in the first code, to obtain multiple target files, where the multiple target files are obtained by selecting different machine instruction combinations for the multiple instructions from the multiple machine instruction sets.

The instruction in the first code has a corresponding machine instruction set, and the machine instruction set may include multiple selectable machine instructions. Therefore, when each target file is generated, any one of the machine instructions may be selected from the machine instruction set corresponding to the instruction in the first code. In this way, for instructions that are in the first code and that correspond to machine instruction sets including multiple machine instructions, different machine instruction combinations are selected from the machine instruction sets for these instructions, to obtain multiple different target files. That is, one target file is equivalent to one machine instruction combination.

For example, it is assumed that the first code includes an instruction A and an instruction B, a machine instruction set corresponding to the instruction A includes a machine instruction 1 and a machine instruction 2, and a machine instruction set corresponding to the instruction B includes a machine instruction 3 and a machine instruction 4. In this way, when a target file 1 is generated, the corresponding machine instruction 1 may be selected for the instruction A, and the corresponding machine instruction 3 may be selected for the instruction B, that is, a machine instruction combination of the target file 1 is the machine instruction 1 + the machine instruction 3; when a target file 2 is generated, the corresponding machine instruction 2 may be selected for the instruction A, and the corresponding machine instruction 3 may be selected for the instruction B, that is, a machine instruction combination of the target file 2 is the machine instruction 2 + the machine instruction 3; when a target file 3 is generated, the corresponding machine instruction 1 may be selected for the instruction A, and the corresponding machine instruction 4 may be selected for the instruction B, that is, a machine instruction combination of the target file 3 is the machine instruction 1 + the machine instruction 4; and when a target file 4 is generated, the corresponding machine instruction 2 may be selected for the instruction A, and the corresponding machine instruction 4 may be selected for the instruction B, that is, a machine instruction combination of the target file 1 is the machine instruction 2 + the machine instruction 4.

Step 204: Separately execute the multiple target files, and select one or more target files with best execution performance based on execution performance of the multiple target files.

The execution performance of the target file may refer to, for example, performance information such as a startup speed or a response speed of the target file.

In this solution, in a compilation process, a corresponding machine instruction set is generated in advance for an instruction in to-be-compiled code, to indicate, based on the machine instruction set, one or more corresponding machine instructions that can be selected during compilation of each instruction in the code, so that the compiler no longer selects a default machine instruction for the instruction in the code, and the compiler is guided to select different machine instruction combinations in the compilation process, to obtain multiple different target files, and finally select a target file with optimal execution performance by executing multiple target files. This can improve flexibility of an instruction selection process, and further obtaining a target file with better execution performance through compilation.

A conventional compilation process is a closed process, and a compiler compiles code according to a specified compilation process. As a result, a same piece of code is usually compiled to obtain only one specific target file. In addition, in the conventional compilation process, for instructions, in the code, for which different machine instructions can be selected as compilation results, the compiler usually selects only a default machine instruction. As a result, a machine instruction selection manner is not flexible, and it is difficult to select an optimal machine instruction. This is because, in many cases, the default machine instruction selected by the compiler is not the optimal machine instruction. In this case, in this solution, multiple corresponding machine instruction sets are generated for code, which is equivalent to providing an external interface for a compilation process, so that a compiler can randomly select a corresponding machine instruction for an instruction corresponding to the multiple machine instructions, to obtain different machine instruction combinations. Finally, performance of the multiple different machine instruction combinations is determined by executing a target file, and one or more machine instruction combinations (that is, the target file) with optimal execution performance are determined.

Optionally, in the foregoing embodiment, multiple instruction configuration files may be generated based on the multiple instructions in the first code. Each instruction configuration file in the multiple instruction configuration files is independently generated based on the first code, and each of the multiple instruction configuration files includes at least one piece of configuration information, that is, each instruction configuration file generates configuration information for at least one instruction in the first code. In the multiple instruction configuration files, different instruction configuration files configure different configuration information for the multiple instructions. Specifically, each instruction configuration file includes at least one piece of configuration information, and each piece of configuration information in the at least one piece of configuration information has a corresponding instruction in the multiple instructions (that is, each instruction for which configuration information needs to be generated has one unique corresponding piece of configuration information), and each piece of configuration information indicates a condition that needs to be met when a corresponding machine instruction is selected for an instruction in the first code. In other words, the configuration information serves as reference information for machine instruction selection corresponding to the instruction in the first code, thereby ensuring that reference to the configuration information is needed for completion of the selection process when the machine instruction is selected for the instruction in the first code.

Specifically, the instruction configuration file is used to record configuration information corresponding to the instruction in the first code. For the multiple instructions in the first code, corresponding configuration information may be generated for all or a part of instructions in the first code, and each instruction for which configuration information needs to be generated has one unique corresponding piece of configuration information. In this way, the configuration information in the instruction configuration file has a correspondence with the instruction in the first code. In addition, each piece of configuration information in the instruction configuration file indicates a condition that needs to be met when a corresponding machine instruction is selected for the instruction in the first code. In other words, the configuration information serves as reference information for machine instruction selection corresponding to the instruction in the first code, thereby ensuring that reference to the configuration information is needed for completion of the selection process when the machine instruction is selected for the instruction in the first code.

For example, it is assumed that instructions, in the first code, for which configuration information needs to be generated are an instruction A and an instruction B. When an instruction configuration file is generated, the instruction configuration file may include configuration information A corresponding to the instruction A and configuration information B corresponding to the instruction B. In addition, the configuration information A indicates a condition A that needs to be met when a corresponding machine instruction is selected for the instruction A, and the configuration information B indicates a condition B that needs to be met when a corresponding machine instruction is selected for the instruction B.

In other words, generating an instruction configuration file is equivalent to specifying a condition that needs to be met when a machine instruction is selected for an instruction in the first code. This reduces a set of selectable machine instructions for the instruction in the first code, and ensures that a specific machine instruction can be selected when a corresponding machine instruction is selected for the instruction in the first code.

It should be noted that, in the instruction configuration file, corresponding configuration information may be configured for all instructions in the first code, or corresponding configuration information may be configured for a part of instructions in the first code. During actual application, the configuration may be determined according to a specific situation of the first code. A quantity of instructions, in the first code, for which configuration information needs to be generated is not limited in embodiments. In addition, the configuration information in the instruction configuration file may be automatically generated by an electronic device based on the instruction in the first code (for example, implemented based on an automatic script), or may be generated by a user through manual filling. Alternatively, a part of the configuration information in the instruction configuration file is automatically generated by the electronic device, and the other part is generated by a user through manual filling. A manner of generating the configuration information is not specifically limited in embodiments.

In this way, corresponding machine instructions may be selected for the multiple instructions in the first code based on the multiple instruction configuration files, to obtain multiple target files corresponding to the multiple instruction configuration files. In other words, the multiple instruction configuration files are in a one-to-one correspondence with the multiple target files, and the multiple target files are obtained based on the different instruction configuration files, respectively. To be specific, after the instruction configuration file is obtained, a condition that needs to be met when a machine instruction is selected for an instruction in the first code may be determined based on configuration information in the instruction configuration file, to ensure that the condition can be met when the corresponding machine instruction is selected for the instruction.

In other words, in a process of compiling the first code, for an instruction that is in the first code and that has corresponding configuration information, a corresponding machine instruction further needs to be selected for the instruction in the first code based on the configuration information in the instruction configuration file, to ensure that the selected machine instruction can meet a condition indicated in the configuration information.

It may be understood that, for an instruction that is in the first code and that does not have configuration information, the compiler may select a machine instruction in a conventional instruction selection manner.

Finally, the multiple target files are separately executed, and one or more target files with best execution performance are selected based on execution performance of the multiple target files. The execution performance of the target file may refer to, for example, performance information such as a startup speed or a response speed of the target file.

In this solution, different configuration information combinations (that is, instruction configuration files) are generated for instructions in a same piece of code, so that different conditions can be specified when corresponding machine instructions are selected for the instructions in the code, and different target files can be further obtained through compilation based on the same piece of code. In this way, a target file with optimal execution performance can be effectively determined by comparing execution performance of different target files. This helps obtain an optimal target file through compilation when it is difficult to determine optimal configuration information of each instruction in code.

Optionally, for any piece of configuration information in the instruction configuration file, the configuration information may include one or more of the following conditions: a type of a functional unit used by a machine instruction, whether a machine instruction updates a status register, a maximum quantity of bits of the machine instruction, an addressing mode of the machine instruction, or whether the machine instruction includes an immediate value. In other words, when a machine instruction is selected for an instruction that is in the first code and that has corresponding configuration information, it needs to be ensured that the selected machine instruction meets one or more of the foregoing conditions indicated by the configuration information. In addition to the conditions described above, the configuration information may also indicate another condition. This is not specifically limited in embodiments.

The functional unit used by the machine instruction may be a functional unit that is in the electronic device and that is configured to run the machine instruction, for example, a scalar operation unit or a logical operation unit.

In this embodiment, a corresponding instruction configuration file is generated for code, which is equivalent to providing an external interface for a compilation process, so that the user can freely configure an instruction selection range in the code compilation process, to ensure that the compiler further needs to consider a condition indicated in the instruction configuration file during selection of a corresponding machine instruction for an instruction in the code, thereby guiding the compiler to select a better machine instruction, and finally obtaining a target file with better execution performance through compilation.

The configuration information may be generated from different perspectives for the instructions in the first code. For example, the corresponding configuration information is generated from the perspectives described above: the type of the functional unit used by the machine instruction, whether the machine instruction updates the status register, the maximum quantity of bits of the machine instruction, the addressing mode of the machine instruction, or whether the machine instruction includes the immediate bit. Therefore, in some cases, for all instructions, in the first code, for which configuration information needs to be generated, it is usually difficult to generate optimal configuration information for each instruction (that is, it is difficult to determine from which perspective the configuration information is generated to obtain the optimal configuration information), and consequently to select an optimal machine instruction.

Based on this, in this embodiment, multiple different instruction configuration files may be generated, and a same piece of code is compiled based on the different instruction configuration files, to obtain different target files, and finally an optimal target file is selected from the multiple different target files.

For example, after the first code is obtained, the multiple instruction configuration files may be generated based on the multiple instructions in the first code. Each instruction configuration file in the multiple instruction configuration files is independently generated based on the first code, and each of the multiple instruction configuration files includes at least one piece of configuration information, that is, each instruction configuration file generates configuration information for at least one instruction in the first code. In the multiple instruction configuration files, different instruction configuration files configure different configuration information for the multiple instructions.

For example, in the multiple instruction configuration files, configuration information generated by an instruction configuration file A for the instruction in the first code indicates a type of a functional unit used by the machine instruction; and configuration information generated by an instruction configuration file B for the instruction in the first code indicates a maximum quantity of bits of the machine instruction. For another example, in an instruction configuration file C, configuration information generated for the instruction A in the first code indicates a type of a functional unit used by the machine instruction, and configuration information for the instruction B in the first code indicates a maximum quantity of bits of the machine instruction; and in an instruction configuration file D, configuration information generated for the instruction A in the first code indicates a maximum quantity of bits of the machine instruction, and configuration information for the instruction A in the first code indicates a type of a functional unit used by the machine instruction. In summary, multiple instruction configuration files having different configuration information combinations may be obtained by generating corresponding configuration information for an instruction in the first code from different perspectives.

Then, corresponding machine instructions may be respectively selected for the multiple instructions in the first code based on the multiple instruction configuration files, to obtain multiple target files corresponding to the multiple instruction configuration files. That is, each instruction configuration file in the multiple instruction configuration files may be used to guide the compilation process of the first code, to generate a corresponding target file. In other words, the multiple instruction configuration files are in a one-to-one correspondence with the multiple target files, and the multiple target files are obtained based on the different instruction configuration files, respectively.

After the multiple target files are obtained, the multiple target files may be separately executed, and execution performance of each target file in the multiple target files is obtained, for example, performance information such as a startup speed or a response speed of each target file.

In this way, based on the execution performance of the multiple target files, one or more target files with best execution performance may be selected as target files finally deployed to a specific application scenario, to complete compilation of the first code.

It should be noted that, during generation of the multiple instruction configuration files and generation of the multiple target files based on the multiple instruction configuration files, some methods (for example, an Autotuner technology) used to implement optimal parameter configuration may be used to analyze which configuration information is generated for the instructions, to improve performance of the target files finally obtained through compilation. In this way, different configuration information is continuously generated for the instructions in the first code, and impact of the different configuration information on compilation of the first code is analyzed, so that optimal configuration information configured for the instructions in the first code can be determined step by step, thereby ensuring that an optimal target file can be finally obtained through compilation based on the instruction configuration file.

In this solution, different configuration information combinations (that is, instruction configuration files) are generated for instructions in a same piece of code, so that different conditions can be specified when corresponding machine instructions are selected for the instructions in the code, and different target files can be further obtained through compilation based on the same piece of code. In this way, a target file with optimal execution performance can be effectively determined by comparing execution performance of different target files. This helps obtain an optimal target file through compilation when it is difficult to determine optimal configuration information of each instruction in code.

For ease of understanding, the following describes how to generate a corresponding instruction configuration file for an instruction in the first code.

Optionally, after the first code is obtained, configuration information in the instruction configuration files may be sequentially generated based on an execution sequence of the multiple instructions in the first code and contexts of the instructions. The contexts of the instructions may include an execution status of the instructions and/or configuration information generated for the instructions.

That is, the configuration information in the instruction configuration files is sequentially generated based on an execution sequence of the instructions in the first code that correspond to the configuration information. If an execution sequence position of an instruction corresponding to configuration information in the first code is earlier, a generation sequence position of the configuration information in an instruction configuration file is also earlier. In addition, when configuration information corresponding to an instruction is generated, in addition to analyzing the instruction itself, a context of the instruction may be further analyzed, so that optimal configuration information can be generated.

It may be understood that an execution sequence of the multiple instructions in the first code is usually fixed. Therefore, an execution sequence of the machine instructions in the target file obtained by compiling the first code is usually also fixed and matches the execution sequence of the instructions in the first code. In addition, on the basis that the instructions have a fixed execution sequence, execution statuses of some instructions with earlier execution sequence positions may usually affect execution statuses of some instructions with later execution sequence positions. Therefore, when a corresponding machine instruction is selected for an instruction in the first code, it is usually easier to select an optimal machine instruction by considering a context of the instruction. For example, when a machine instruction with a specific quantity of bits is selected for some instructions with earlier execution sequence positions, a related instruction with later execution sequence positions may also select a machine instruction with the same quantity of bits, to improve an execution speed of the machine instruction.

Based on this, in this solution, configuration information corresponding to instructions is sequentially generated based on an execution sequence of the instructions in code and contexts of the instructions, so that impact of the instruction context on machine instruction selection can be considered in a process of generating the configuration information, to generate configuration information that can be used to select an optimal machine instruction, thereby ensuring quality of a target file finally generated based on the configuration information.

For example, in obtaining of the first code, an instruction configuration template may be first generated based on the execution sequence of the multiple instructions in the first code. The instruction configuration template indicates a target instruction, in the multiple instructions, for which configuration information needs to be generated, and a location of the target instruction in the multiple instructions. The target instruction may include one or more instructions, and a quantity of instructions included in the target instruction is the same as a quantity of configuration information in the instruction configuration file. For example, the instruction configuration template may indicate a specific instruction (that is, a target instruction), in the first code, for which configuration information needs to be generated, and an index corresponding to each instruction in the target instruction. The index corresponding to the instruction may indicate a location of the instruction in the multiple instructions in the first code.

Then, corresponding configuration information is sequentially filled in the instruction configuration template for the target instruction based on a context of the target instruction, to obtain an instruction configuration file, where the context of the target instruction is obtained based on a location of the target instruction in the multiple instructions.

In this solution, an instruction configuration template is generated in advance based on an execution sequence of instructions in code, so that an instruction, in the code, for which configuration information needs to be generated and a location of the instruction in the code may be indicated based on the instruction configuration template. In this way, when the configuration information is subsequently generated for the instructions in the code, the configuration information is directly filled in the instruction configuration template based on an indication of the instruction configuration template, to complete construction of the instruction configuration file. In addition, one instruction configuration template may be repeatedly used to generate multiple different instruction configuration files, thereby improving generation efficiency of the instruction configuration files.

In this embodiment, corresponding configuration information may be generated for an instruction from different perspectives. Therefore, the target instruction, in the first code, for which the configuration information needs to be generated may also be related to a type of the configuration information. For example, when the configuration information in the instruction configuration file indicates a type of a functional unit used by the machine instruction, the target instruction for which the configuration information needs to be generated needs to support being compiled into a machine instruction that uses multiple functional units. To be specific, only when the instruction in the first code supports being compiled into a machine instruction that uses multiple functional units, the instruction needs to specify, in an instruction selection phase, the type of the functional unit used by the machine instruction. If the instruction in the first code does not support being compiled into a machine instruction that uses multiple functional units (for example, the instruction can only be compiled into a machine instruction that uses a specific functional unit), the instruction does not need to specify the type of the functional unit used by the machine instruction in the instruction selection phase.

In this solution, the target instruction, in the code, for which the configuration information needs to be generated is determined from the perspective of the type of the configuration information that needs to be generated for the instruction, to ensure that the configuration information generated for the target instruction can indeed affect a process of selecting a machine instruction for the target instruction, and ensure that all configuration information generated for the target instruction is valid, thereby avoiding generation of invalid configuration information.

In addition, the following uses an example to describe how to generate the configuration information based on the execution sequence of the instructions and the contexts of the instructions.

Specifically, the multiple instructions in the first code include a first instruction and a second instruction, and both the first instruction and the second instruction support being compiled into machine instructions that use a first functional unit or a second functional unit. In other words, in the instruction selection phase, there are multiple machine instructions that can be selected for the first instruction and the second instruction. The compiler may select, for the first instruction and the second instruction, the machine instructions that use the first functional unit, or may select, for the first instruction and the second instruction, the machine instructions that use the second functional unit. In addition, an execution sequence position of the first instruction in the first code is before that of the second instruction, that is, the first instruction is executed before the second instruction.

In a process of generating the configuration information in the instruction configuration file, corresponding first configuration information is first generated for the first instruction based on the first instruction and a context of the first instruction, where the first configuration information indicates that a machine instruction selected for the first instruction uses the first functional unit, and the context of the first instruction indicates that the first functional unit and the second functional unit are not occupied. That is, it may be determined, based on the context of the first instruction, that neither the first functional unit nor the second functional unit is occupied by an instruction. Therefore, the machine instruction that uses the first functional unit or the second function may be selected for the first instruction. For example, in this embodiment, the machine instruction that uses the first functional unit is selected for the first instruction by default.

Then, corresponding second configuration information is generated for the second instruction based on the second instruction and a context of the second instruction, where the second configuration information indicates that a machine instruction selected for the second instruction uses the second functional unit, and the context of the second instruction indicates that the first instruction executed before the second instruction has occupied the first functional unit.

In other words, when it is determined, based on the context of the second instruction, that another instruction executed before the second instruction has occupied the first functional unit, a machine instruction that uses the unoccupied second functional unit may be selected for the second instruction. This avoids selecting a machine instruction that uses a same functional unit for both the first instruction and the second instruction. In this way, when the target file is executed, the first functional unit is used to execute the machine instruction corresponding to the first instruction, and the second functional unit is used to execute the machine instruction corresponding to the second instruction, to avoid, as much as possible, a case in which an instruction waits to be executed when different machine instructions are executed by a same functional unit, thereby improving an execution speed of the machine instruction.

In this solution, for instructions that can be compiled into machine instructions that use different functional units in code, configuration information is generated for the instructions based on contexts of the instructions, so that machine instructions that use different functional units can be selected for different instructions as much as possible, and a case in which an instruction waits to be executed when different machine instructions are executed by a same functional unit can be avoided, thereby improving an execution speed of a target file obtained through compilation.

The foregoing describes the parameterized instruction selection method provided in embodiments. For ease of understanding, the following describes in detail, with reference to specific examples, how to implement the parameterized instruction selection method provided in embodiments in an actual application.

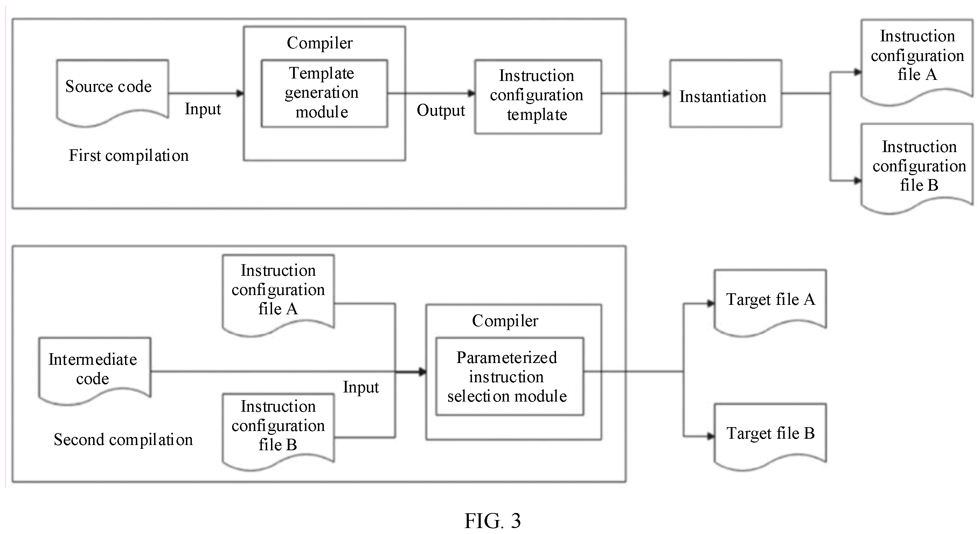

For example, FIG. 3 is a schematic flowchart of application of a parameterized instruction selection method according to an embodiment of this application. As shown in FIG. 3, in a first compilation phase, a compiler first translates source code into intermediate code, and then a configuration template generation module outputs a corresponding instruction configuration template based on the input intermediate code, and then performs different instantiation processes on a same instruction configuration template (that is, configures different configuration information combinations for instructions in the intermediate code), to obtain multiple different instruction configuration files (for example, an instruction configuration file A and an instruction configuration file B in FIG. 3).

In a second compilation phase, the compiler uses the instruction configuration file and the corresponding intermediate code as a compilation input. When performing a step, a parameterized instruction selection module selects, for an instruction based on configuration information indicated by the instruction configuration file, a machine instruction that meets a requirement of the configuration information, to obtain a target file. In this way, when compiling same intermediate code, the compiler may output different target files based on different input instruction configuration files. For example, the parameterized instruction selection module of the compiler outputs a target file A based on the instruction configuration file A; and the parameterized instruction selection module of the compiler outputs a target file B based on the instruction configuration file B.

In conclusion, in this embodiment, an interface for interaction between the compiler and the outside is extended, and instruction selection is implemented through configuration based on the instruction configuration file A in an instruction selection phase of a compilation process, so that interaction between an external input and the instruction selection phase can be implemented.

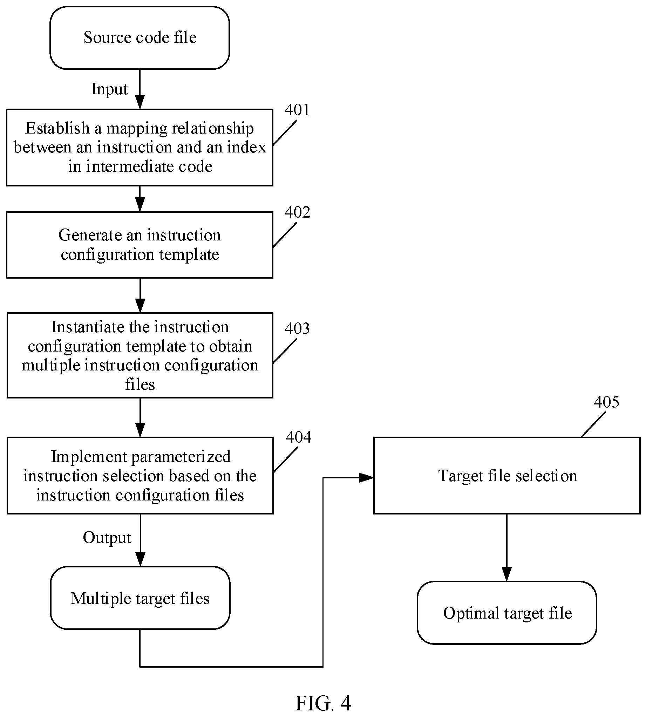

FIG. 4 is a schematic flowchart of performing a parameterized instruction selection method in an actual application process according to an embodiment of this application. As shown in FIG. 4, in the actual application process, an execution procedure of the parameterized instruction selection method includes the following steps 401 to 405.

Step 401: Analyze intermediate code, to establish a mapping relationship between an instruction and an index in the intermediate code.

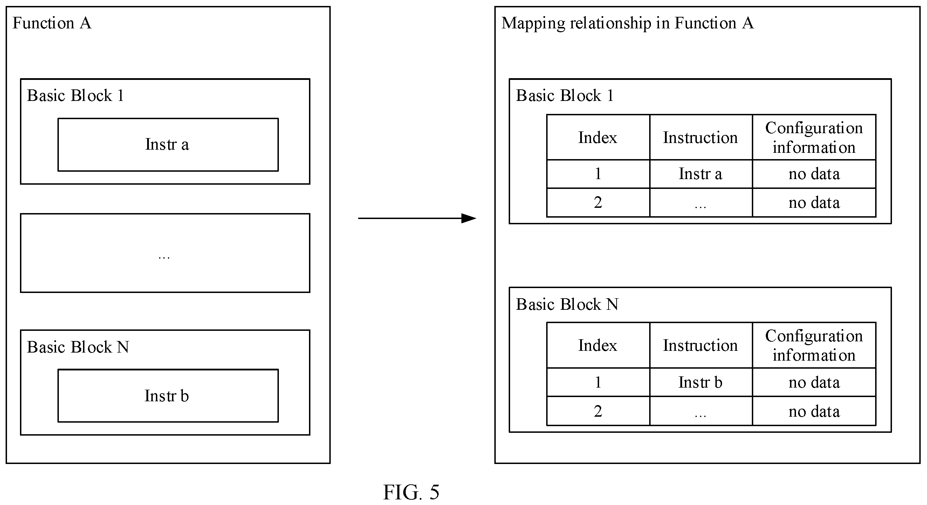

For example, FIG. 5 is a diagram of establishing a mapping relationship between an instruction and an index for a function in intermediate code according to an embodiment of this application. As shown in FIG. 5, for a function A (Function A) in the intermediate code, a mapping relationship between an instruction and an index in Function A may be established, to indicate a relative location of an instruction, in the intermediate code, for which configuration information needs to be generated. Specifically, the established mapping relationship includes three pieces of content: an index (index), an instruction (instr), and configuration information (config info). In the three pieces of content, the index indicates a relative location of an instruction in the intermediate code, and a value of the index starts from 1; the instruction indicates an instruction that is in the intermediate code and that corresponds to a current index; and the configuration information is configuration information corresponding to an instruction in a current mapping relationship. Because the configuration information has not been generated, specific content of the configuration information may be no data, indicating that the current configuration information is to be generated.

For example, for the following intermediate code:

```
         Function A{
           Basic Block A1{
             Instr a;
             Instr b;
           }
```

in the index table corresponding to Function A:: Basic Block A1, an index value of Instr a is 1, and an index value of Instr b is 2.

Step 402: Generate an instruction configuration template based on the mapping relationship between the instruction and the index.

After the mapping relationship between the instruction and the index is obtained, a template data object may be initialized, and then an instruction configuration template (source.config) is output in a specific file format. Specifically, the instruction configuration template may be further generated based on the original intermediate code in combination with the mapping relationship between the instruction and the index, so that the index and the configuration information is clearly indicated in the original intermediate code. In this way, a location of each instruction for which configuration information needs to be generated and a context of the instruction are determined.

For example, the following is an example of a format of a generated instruction configuration template.

```
         Function A{
         Basic Block A1{
             index a, Instr a, config info a;
             index b, Instr b, config info b.
```

Step 403: Instantiate the instruction configuration template to obtain multiple instruction configuration files.

In this step, multiple different instantiations are performed on the instruction configuration template, to obtain multiple different instruction configuration files. Specifically, the instruction configuration template already indicates a mapping relationship between an index, an instruction, and configuration information. An instantiation process may be generating specific configuration information for an instruction that has configuration information. In addition, different instantiation processes for a same instruction configuration template may be generating different configuration information for a same instruction, so that different instruction configuration information actually indicates different configuration information combinations.

For example, for a same instruction configuration template, corresponding configuration information may be generated from different perspectives. For example, based on the instruction configuration template, corresponding configuration information may be generated for each instruction from a perspective of a type of a functional unit used by a machine instruction, to indicate the type of the functional unit used by the machine instruction selected for the instruction, to obtain the instruction configuration file A. For another example, based on the instruction configuration template, corresponding configuration information may be generated for each instruction from a perspective of a maximum quantity of bits of a machine instruction, to indicate the maximum quantity of bits of the machine instruction selected for the instruction, to obtain the instruction configuration file B.

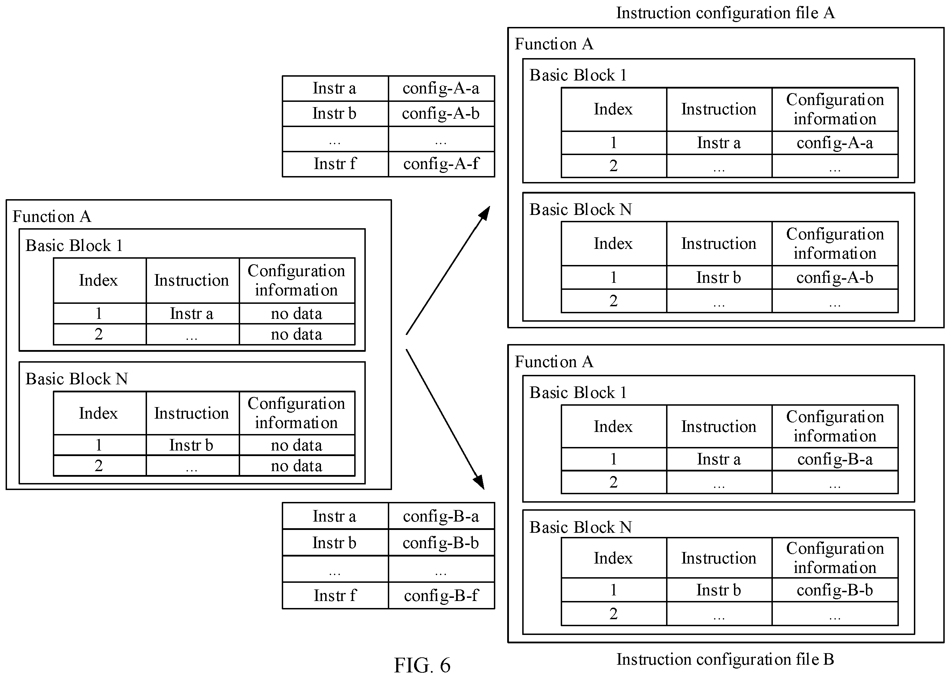

FIG. 6 is a diagram of performing an instantiation process on an instruction configuration template to generate different instruction configuration files according to an embodiment of this application. As shown in FIG. 6, for a same instruction configuration template (that is, an instruction configuration template corresponding to Function A), different configuration information may be generated for instructions in the same instruction configuration template, to generate different configuration information combinations for a same instruction set, to obtain different instruction configuration files. For example, in the instruction configuration file A, configuration information generated for the instruction a (Instr a) is config-A-a, configuration information generated for the instruction b (Instr b) is config-A-b, ..., and configuration information generated for an instruction f (Instr f) is config-A-f. In the instruction configuration file B, configuration information generated for the instruction a (Instr a) is config-B-a, configuration information generated for the instruction b (Instr b) is config-B-b, ..., and configuration information generated for the instruction f (Instr f) is config-B-f.

It should be noted that, for any two different instruction configuration files, between the two instruction configuration files, configuration information corresponding to only some instructions may be different, or configuration information corresponding to all instructions may be different. This is not specifically limited in embodiments.

Step 404: Implement parameterized instruction selection based on the instruction configuration files, and output multiple target files.

In this step, for same intermediate code, machine instructions may be selected for instructions in the intermediate code based on multiple different instruction configuration files, to output multiple different target files. In addition, there is a one-to-one correspondence between the multiple target files and the multiple instruction configuration files.

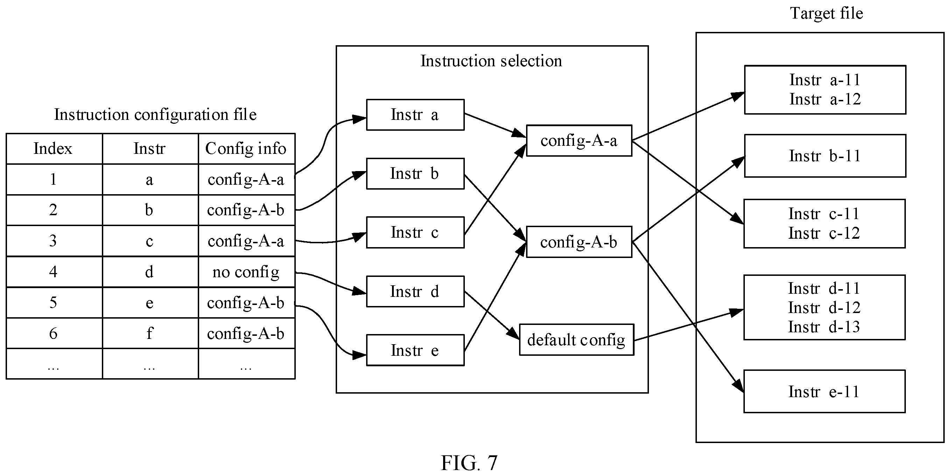

For example, FIG. 7 is a diagram of generating a target file based on an instruction configuration file according to an embodiment of this application. As shown in FIG. 7, in the instruction configuration file, corresponding configuration information is indicated for all instructions (that is, instr a to instr f) in the intermediate code. For example, corresponding configuration information for instr a and instr c is config-A-a, corresponding configuration information for instr b, instr e, and instr f is config-A-b, and instr d has no corresponding configuration information. In this case, in the instruction selection phase, a corresponding machine instruction may be selected based on configuration information corresponding to each instruction, to obtain the target file. For example, for instr a in the intermediate code, machine instructions Instr a-11 and Instr a-12 may be selected based on the configuration information config-A-a, that is, the instruction instr a in the intermediate code is implemented via the machine instructions Instr a-11 and Instr a-12 in the target file. For instr b in the intermediate code, a machine instruction Instr b-11 may be selected based on the configuration information config-A-b. For instr d in the intermediate code, because instr d has no corresponding configuration information, machine instructions Instr d-11, Instr d-12, and Instr d-13 may be selected based on default configuration information.

Step 405: Filter the multiple target files to obtain an optimal target file.

After the multiple target files are obtained, each target file may be executed in a same running environment, to obtain execution performance of each target file, for example, a startup speed or a response speed during running of each target file. In this way, a target file with best execution performance is selected as an optimal target file, so that an optimal target file is subsequently deployed in an actual application environment.

For ease of understanding, the following describes in detail, with reference to an example, an execution process of multiple steps in the embodiment shown in FIG. 4 from a perspective of using a type of a functional unit used by a machine instruction as configuration information.

Specifically, in this embodiment, based on a compilation framework under a low-level virtual machine (Low Level Virtual Machine, LLVM), an instruction configuration template generator module is added, an output interface for interaction with the outside is defined: -mllvm -linglong-autotuner-for-agx-mvu=true, and an instruction selection module is identified and modified. With reference to an Autotuner technology, a parameterized instruction selection technology is used to perform configurable instruction selection optimization on a vector instruction functional unit, so that a benefit of performance improvement is obtained in a final result.

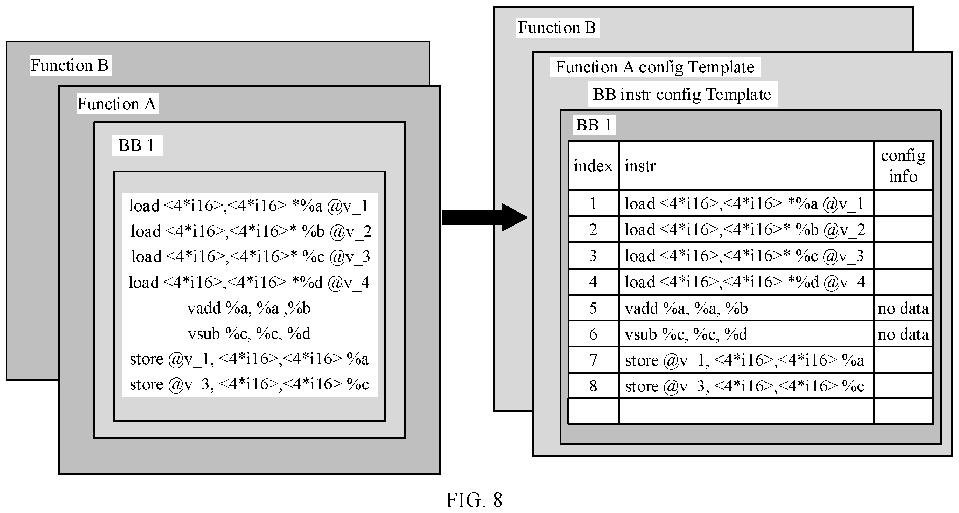

First, in an instruction mapping establishment phase, a source code file Source.c is input, and the compiler outputs intermediate code Source.ll. The parameterized instruction selection uses the intermediate code Source.ll as an input to generate an instruction configuration table for all instructions in the intermediate code Source.ll. The instruction configuration table initializes a configuration entry Config_info to "no data" only for a configurable instruction. FIG. 8 is a diagram of generating an instruction configuration table according to an embodiment of this application. In FIG. 8, because a Load instruction and a Store instruction use only a single functional unit, configuration information does not need to be generated, and Config_info is not initialized in a process of generating an instruction configuration table. Vadd and Vsub instructions can use two types of functional units, and require configuration information. During the generation of the instruction configuration table, Config_info is initialized to "no data".

Then, during the generation of the instruction configuration table, the instruction configuration template may be further generated based on the instruction configuration table and the intermediate code. Function B in the intermediate code shown in FIG. 8 is used as an example, and a specifically generated instruction configuration template may be shown as follows:

```
         Function B{
         Basic Block BB1{
           1, load <4*i16><4*i16> *%a @v_1, null;
           2, load <4*i16><4*i16>* %b @v_2, null;
           3, load <4*i16><4*i16>* %c @v_3, null;
           4, load <4*i16><4*i16> *%d @v_4, null;
           5,vadd %a %a %b, @axu;
           6,vsub %c %c %d, @mvu;
           7,store @v_1, <4*i16><4*i16> %a,null;
           8,store @v_3, <4*16><4*i16> %c,null;
         }
```

Then, the instruction configuration file can be obtained by instantiating the instruction configuration template.

Specifically, in this embodiment, a script program may be used to identify an instruction marked with "no data" in the instruction configuration template, and fill in Config info item data in the instruction configuration template for the instruction marked with "no data", to obtain the instruction configuration file.

Specifically, in a process of filling in the configuration information corresponding to the instruction in the instruction configuration template, actually, corresponding configuration information may be selected from a set of selectable configuration information for each instruction based on a context of the instruction, and the selected configuration information is filled in Config info item data corresponding to the instruction, to generate corresponding configuration information for each instruction.

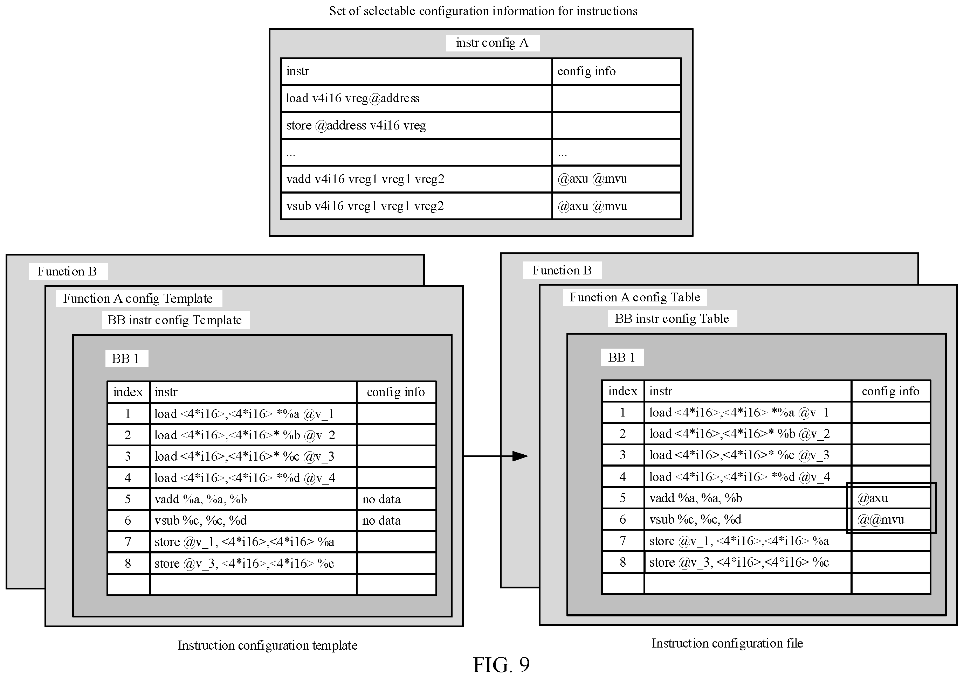

FIG. 9 is a diagram of a process of instantiating an instruction configuration template according to an embodiment of this application. As shown in FIG. 9, instructions marked with "no data" in the instruction configuration template include the vadd instruction and the vsub instruction. For the vadd instruction, a set of selectable configuration information for the vadd instruction is {@axu,@mvu}, and a set of selectable configuration information for the vsub instruction is {@axu,@mvu}. In other words, both vadd and vsub are multi-functional unit instructions, and may be executed in an axu functional unit or a mvu functional unit.

In the process of instantiating the instruction configuration template, it can be learned from a context of the vadd instruction that, when the vadd instruction is executed, neither the axu functional unit nor the mvu functional unit is occupied by another instruction, and in this case, the axu functional unit and the mvn functional unit may be selected, for example, the axu functional unit is selected by default. Therefore, in the instantiation process, an instruction selected for the vadd instruction is vadd@axu, and vadd instruction configuration information is updated to @axu.

During instantiation of configuration information that corresponds to the vsub instruction and that is in the instruction configuration template, it can be learned from a context of the vsub instruction that, when the vsub instruction is executed, the axu functional unit is occupied by the vadd instruction, and in this case, the mvu functional unit may be selected for the vsub instruction. Therefore, in the instantiation process, an instruction selected for the vsub instruction is vsub@mvu, and vsub instruction configuration information is updated to @mvu.

Finally, based on the obtained instruction configuration file, a corresponding machine instruction is selected for each instruction that is in the intermediate code and that has configuration information, to implement a parameterized instruction selection process.

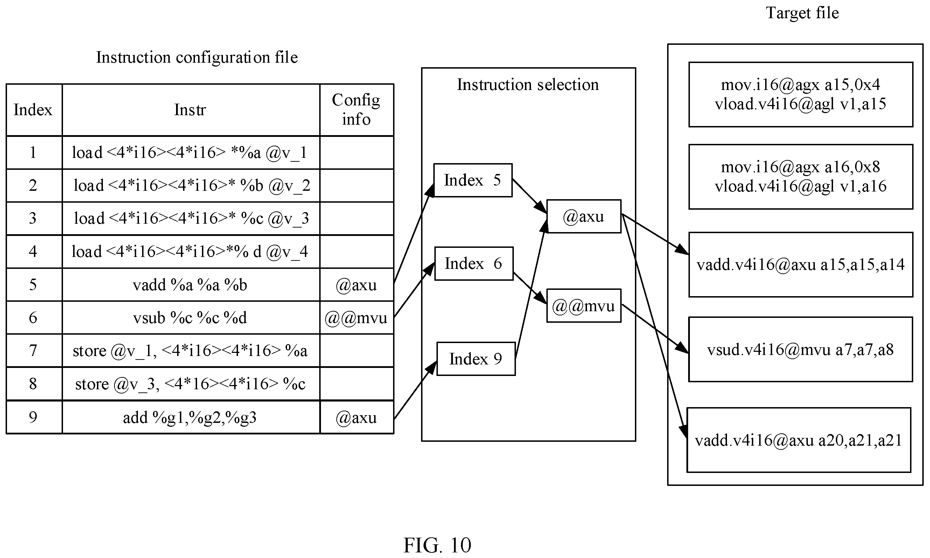

For example, FIG. 10 is a diagram of a process of implementing parameterized instruction selection according to an embodiment of this application. As shown in FIG. 10, in the instruction configuration file, instructions vadd, vasub, and add that have configuration information are all multi-functional unit instructions, and in the parameterized instruction selection process, a machine instruction that uses a corresponding functional unit may be selected based on configuration information of the instruction. Configuration information corresponding to the instruction vadd %a %a %b whose index value is 5 is @axu. Therefore, a machine instruction generated for the instruction may be specifically vadd.v4i16@axu a15,a15,a14. Configuration information corresponding to the instruction vsub %c %c %d whose index value is 6 is @@mvu. Therefore, a machine instruction generated for the instruction may be specifically vsud.v4i16@mvu a7,a7,a8. Configuration information corresponding to the instruction add %g1,%g2,%g3 whose index value is 9 is @axu. Therefore, a machine instruction generated for the instruction may be specifically vadd.v4i16@axu a20,a21,a21.

The foregoing describes in detail the method provided in embodiments of this application. The following describes a device that is provided in embodiments of this application and that is configured to perform the foregoing methods.

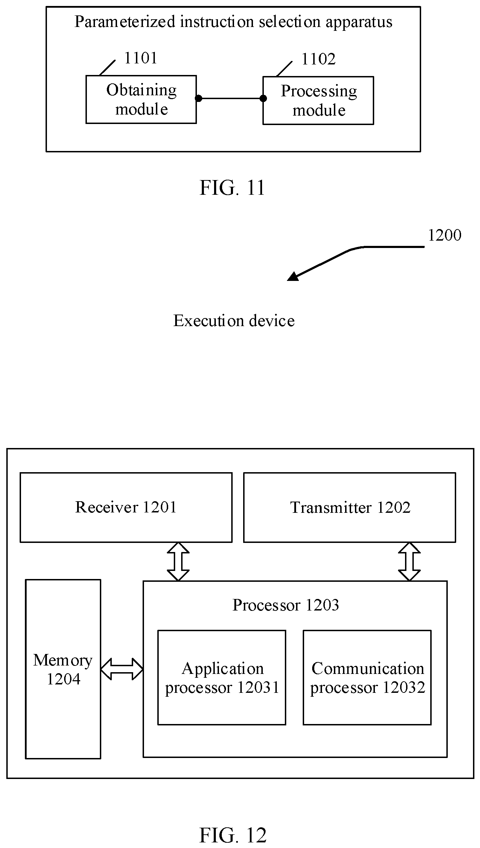

FIG. 11 is a diagram of a structure of a parameterized instruction selection apparatus according to an embodiment of this application. As shown in FIG. 11, the parameterized instruction selection apparatus provided in this embodiment includes: an obtaining module 1101, configured to obtain first code, where the first code includes multiple instructions; and a processing module 102, configured to generate, based on the multiple instructions, multiple machine instruction sets corresponding to the multiple instructions, where the multiple instructions are used to select, from the corresponding machine instruction sets, machine instructions used for compilation. The processing module 102 is further configured to perform multiple rounds of machine instruction selection for the multiple instructions, to obtain multiple target files, where the multiple target files are obtained by selecting different machine instruction combinations for the multiple instructions from the multiple machine instruction sets; and the processing module 102 is further configured to select a target file with best execution performance from the multiple target files.

In a possible implementation, the processing module 1102 is further configured to: generate multiple instruction configuration files based on the multiple instructions, where each instruction configuration file includes at least one piece of configuration information corresponding to a single instruction, and the configuration information indicates a condition that needs to be met when a corresponding machine instruction is selected for the corresponding instruction; and perform multiple rounds of machine instruction selection for the multiple instructions based on the multiple instruction configuration files, to obtain the multiple target files, where the multiple target files are in a one-to-one correspondence with the multiple instruction configuration files.

In a possible implementation, the at least one piece of configuration information includes one or more of the following conditions: a type of a functional unit used by a machine instruction, whether a machine instruction updates a status register, a maximum quantity of bits of the machine instruction, an addressing mode of the machine instruction, or whether the machine instruction includes an immediate value.

In a possible implementation, the processing module 1102 is further configured to generate configuration information in the multiple instruction configuration files based on an execution sequence of the multiple instructions in the first code and contexts of the instructions.

In a possible implementation, the processing module 1102 is further configured to: generate an instruction configuration template based on the execution sequence of the multiple instructions in the first code, where the instruction configuration template indicates a target instruction, in the multiple instructions, for which configuration information needs to be generated, and a location of the target instruction in the multiple instructions; and sequentially fill the corresponding configuration information in the instruction configuration template for the target instruction based on a context of the target instruction, to obtain a first instruction configuration file, where the context of the target instruction is obtained based on the location of the target instruction in the multiple instructions, and the multiple instruction configuration files include the first instruction configuration file.

In a possible implementation, when the configuration information in the instruction configuration file indicates a type of a functional unit used by a machine instruction, the target instruction for which the configuration information needs to be generated supports being compiled into a machine instruction that uses multiple functional units.

In a possible implementation, the multiple instructions include a first instruction and a second instruction, and both the first instruction and the second instruction support being compiled into machine instructions that use a first functional unit or a second functional unit; and the processing module 1102 is further configured to: generate corresponding first configuration information for the first instruction based on the first instruction and a context of the first instruction, where the first configuration information indicates that a machine instruction selected for the first instruction uses the first functional unit, and the context of the first instruction indicates that the first functional unit and the second functional unit are not occupied; and generate corresponding second configuration information for the second instruction based on the second instruction and a context of the second instruction, where the second configuration information indicates that a machine instruction selected for the second instruction uses the second functional unit, and the context of the second instruction indicates that the first instruction executed before the second instruction has occupied the first functional unit.

In a possible implementation, the first code is intermediate code.

FIG. 12 is a diagram of a structure of an execution device according to an embodiment of this application. As shown in FIG. 12, the execution device 1200 is configured to perform the parameterized instruction selection method described in the foregoing embodiments, and the execution device 1200 may be specifically represented as a server. This is not limited herein. Specifically, the execution device 1200 includes a receiver 1201, a transmitter 1202, a processor 1203, and a memory 1204 (where there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide an instruction and data to the processor 1203. A part of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1203, or may be implemented by the processor 1203. The processor 1203 may be an integrated circuit chip with a signal processing capability. During implementation, the steps of the foregoing method may be completed by using a hardware integrated logic circuit in the processor 1203 or instructions in a form of software. The processor 1203 may be a general-purpose processor, a digital signal processor ( digital signal processing, DSP), a microprocessor, or a microcontroller, and may further include an application-specific integrated circuit (application-specific integrated circuit, ASIC), a field programmable gate array (field programmable gate array, FPGA) or another programmable logic device, a discrete gate or transistor logic device, or a discrete hardware component.

The processor 1203 may implement or perform the method, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor. A software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204, and completes the steps of the foregoing method in combination with hardware of the processor.

The receiver 1201 may be configured to receive input digit or character information, and generate a signal input related to related setting and function control of the execution device. The transmitter 1202 may be configured to output digit or character information through a first interface. The transmitter 1202 may be further configured to send an instruction to a disk group through the first interface, to modify data in the disk group. The transmitter 1202 may further include a display device such as a display.

The execution device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in the execution device to perform the method described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

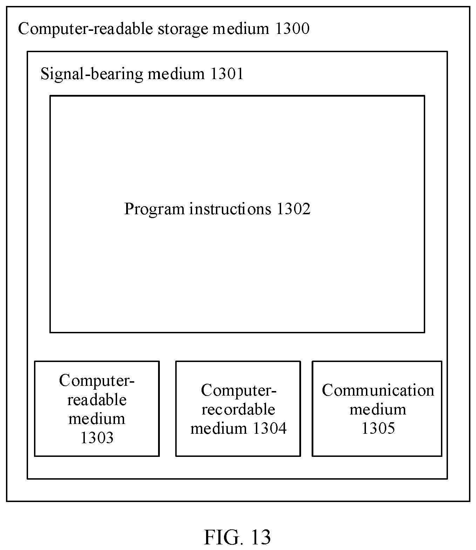

FIG. 13 is a diagram of a structure of a computer-readable storage medium according to an embodiment of this application. This application further provides a computer-readable storage medium. In some embodiments, the method disclosed in FIG. 2 may be implemented as computer program instructions encoded on the computer-readable storage medium or encoded on another non-transitory medium or product in a machine-readable format.

FIG. 13 schematically shows a conceptual partial view of an example computer-readable storage medium arranged according to at least some embodiments shown herein, and the example computer-readable storage medium includes a computer program for executing a computer process on a compute device.

In an embodiment, the computer-readable storage medium 1300 is provided by using a signal-bearing medium 1301. The signal-bearing medium 1301 may include one or more program instructions 1302. When the one or more program instructions 1302 are run by one or more processors, the foregoing functions or a part of the foregoing functions described for FIG. 2 may be provided.

In some examples, the signal-bearing medium 1301 may include a computer-readable medium 1303, for example, but not limited to, a hard disk drive, a compact disc (CD), a digital video disc (DVD), a digital tape, a memory, a ROM, or a RAM.

In some implementations, the signal-bearing medium 1301 may include a computer-recordable medium 1304, for example, but not limited to, a memory, a read/write (R/W) CD, or an R/W DVD. In some implementations, the signal-bearing medium 1301 may include a communication medium 1305, for example, but not limited to, a digital and/or analog communication medium (for example, an optical fiber, a waveguide, a wired communication link, or a wireless communication link). Therefore, for example, the signal-bearing medium 1301 may be conveyed by the communication medium 1305 in a wireless form (for example, a wireless communication medium that complies with the IEEE 802.X standard or another transmission protocol).

The one or more program instructions 1302 may be, for example, computer-executable instructions or logic implementation instructions. In some examples, the compute device may be configured to provide various operations, functions, or actions in response to the program instruction 1302 conveyed to the compute device by using one or more of the computer-readable medium 1303, the computer-recordable medium 1304, and/or the communication medium 1305.

In addition, it should be noted that the apparatus embodiments described above are merely examples. The units described as separate parts may or may not be physically separate, and parts displayed as units may or may not be physical units, that is, may be located at one place, or may be distributed on multiple network units. A part or all of the modules may be selected according to actual needs to achieve the objectives of the solutions of embodiments. In addition, in the accompanying drawings of the apparatus embodiment provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

## Claims

1. A parameterized instruction selection method, comprising:
obtaining first code, wherein the first code comprises multiple instructions;
generating, based on the multiple instructions, multiple machine instruction sets corresponding to the multiple instructions, wherein the multiple instructions are used to select, from the corresponding machine instruction sets, machine instructions used for compilation;
performing multiple rounds of machine instruction selection for the multiple instructions, to obtain multiple target files, wherein the multiple target files are obtained by selecting different machine instruction combinations for the multiple instructions from the multiple machine instruction sets; and
selecting a target file with best execution performance from the multiple target files.

2. The method according to claim 1, wherein the method further comprises:
generating multiple instruction configuration files based on the multiple instructions, wherein each instruction configuration file comprises at least one piece of configuration information corresponding to a single instruction, and the configuration information indicates a condition that needs to be met when a machine instruction is selected for the corresponding instruction; and
the performing multiple rounds of machine instruction selection for the multiple instructions to obtain the multiple target files comprises:
performing multiple rounds of machine instruction selection for the multiple instructions based on the multiple instruction configuration files, to obtain the multiple target files, wherein the multiple target files are in a one-to-one correspondence with the multiple instruction configuration files.

3. The method according to claim 2, wherein the at least one piece of configuration information comprises one or more of the following conditions: a type of a functional unit used by a machine instruction, whether a machine instruction updates a status register, a maximum quantity of bits of the machine instruction, an addressing mode of the machine instruction, or whether the machine instruction comprises an immediate value.

4. The method according to any one of claims 2 to 3, wherein the generating the multiple instruction configuration files based on the multiple instructions in the first code comprises:
generating configuration information in the multiple instruction configuration files based on an execution sequence of the multiple instructions in the first code and contexts of the instructions.

5. The method according to claim 4, wherein the generating the configuration information in the multiple instruction configuration files based on the execution sequence of the multiple instructions in the first code and the contexts of the instructions comprises:
generating an instruction configuration template based on the execution sequence of the multiple instructions in the first code, wherein the instruction configuration template indicates a target instruction, in the multiple instructions, for which configuration information needs to be generated, and a location of the target instruction in the multiple instructions; and
sequentially filling the corresponding configuration information in the instruction configuration template for the target instruction based on a context of the target instruction, to obtain a first instruction configuration file, wherein the context of the target instruction is obtained based on the location of the target instruction in the multiple instructions, and the multiple instruction configuration files comprise the first instruction configuration file.

6. The method according to claim 5, wherein when the configuration information in the first instruction configuration file indicates a type of a functional unit used by a machine instruction, the target instruction for which the configuration information needs to be generated supports being compiled into a machine instruction that uses multiple functional units.

7. The method according to claim 4, wherein the multiple instructions comprise a first instruction and a second instruction, and both the first instruction and the second instruction support being compiled into machine instructions that use a first functional unit or a second functional unit; and
the generating the configuration information in the multiple instruction configuration files based on the execution sequence of the multiple instructions in the first code and the contexts of the instructions comprises:
generating corresponding first configuration information for the first instruction based on the first instruction and a context of the first instruction, wherein the first configuration information indicates that a machine instruction selected for the first instruction uses the first functional unit, and the context of the first instruction indicates that the first functional unit and the second functional unit are not occupied; and
generating corresponding second configuration information for the second instruction based on the second instruction and a context of the second instruction, wherein the second configuration information indicates that a machine instruction selected for the second instruction uses the second functional unit, and the context of the second instruction indicates that the first instruction executed before the second instruction has occupied the first functional unit.

8. The method according to any one of claims 1 to 7, wherein the first code is intermediate code.

9. A parameterized instruction selection apparatus, comprising:
an obtaining module, configured to obtain first code, wherein the first code comprises multiple instructions; and
a processing module, configured to generate, based on the multiple instructions, multiple machine instruction sets corresponding to the multiple instructions, wherein the multiple instructions are used to select, from the corresponding machine instruction sets, machine instructions used for compilation, wherein
the processing module is further configured to perform multiple rounds of machine instruction selection for the multiple instructions, to obtain multiple target files, wherein the multiple target files are obtained by selecting different machine instruction combinations for the multiple instructions from the multiple machine instruction sets; and
the processing module is further configured to select a target file with best execution performance from the multiple target files.

10. The apparatus according to claim 9, wherein the processing module is further configured to:
generate multiple instruction configuration files based on the multiple instructions, wherein each instruction configuration file comprises at least one piece of configuration information corresponding to a single instruction, and the configuration information indicates a condition that needs to be met when a machine instruction is selected for the corresponding instruction; and
perform multiple rounds of machine instruction selection for the multiple instructions based on the multiple instruction configuration files, to obtain the multiple target files, wherein the multiple target files are in a one-to-one correspondence with the multiple instruction configuration files.

11. The apparatus according to claim 10, wherein the at least one piece of configuration information comprises one or more of the following conditions: a type of a functional unit used by a machine instruction, whether a machine instruction updates a status register, a maximum quantity of bits of the machine instruction, an addressing mode of the machine instruction, or whether the machine instruction comprises an immediate value.

12. The apparatus according to any one of claims 9 to 11, wherein the processing module is further configured to:
generate configuration information in the multiple instruction configuration files based on an execution sequence of the multiple instructions in the first code and contexts of the instructions.

13. The apparatus according to claim 12, wherein the processing module is further configured to:
generate an instruction configuration template based on the execution sequence of the multiple instructions in the first code, wherein the instruction configuration template indicates a target instruction, in the multiple instructions, for which configuration information needs to be generated, and a location of the target instruction in the multiple instructions; and
sequentially fill the corresponding configuration information in the instruction configuration template for the target instruction based on a context of the target instruction, to obtain a first instruction configuration file, wherein the context of the target instruction is obtained based on the location of the target instruction in the multiple instructions, and the multiple instruction configuration files comprise the first instruction configuration file.

14. The apparatus according to claim 13, wherein when the configuration information in the first instruction configuration file indicates a type of a functional unit used by a machine instruction, the target instruction for which the configuration information needs to be generated supports being compiled into a machine instruction that uses multiple functional units.

15. The apparatus according to claim 12, wherein the multiple instructions comprise a first instruction and a second instruction, and both the first instruction and the second instruction support being compiled into machine instructions that use a first functional unit or a second functional unit; and
the processing module is further configured to:
generate corresponding first configuration information for the first instruction based on the first instruction and a context of the first instruction, wherein the first configuration information indicates that a machine instruction selected for the first instruction uses the first functional unit, and the context of the first instruction indicates that the first functional unit and the second functional unit are not occupied; and
generate corresponding second configuration information for the second instruction based on the second instruction and a context of the second instruction, wherein the second configuration information indicates that a machine instruction selected for the second instruction uses the second functional unit, and the context of the second instruction indicates that the first instruction executed before the second instruction has occupied the first functional unit.

16. The apparatus according to any one of claims 9 to 15, wherein the first code is intermediate code.

17. A parameterized instruction selection apparatus, comprising a memory and a processor, wherein the memory stores code, the processor is configured to execute the code, and when the code is executed, the apparatus performs the method according to any one of claims 1 to 8.

18. A computer storage medium, wherein the computer storage medium stores instructions, and when the instructions are executed by a computer, the computer is enabled to perform the method according to any one of claims 1 to 8.

19. A computer program product, wherein the computer program product stores instructions, and when the instructions are executed by a computer, the computer is enabled to perform the method according to any one of claims 1 to 8.
